# EUROPÄISCHE PATENTANMELDUNG

(11) **EP 1 279 722 A1**
(43) Veröffentlichungstag der Anmeldung: **29.01.2003**
(21) Anmeldenummer: 01130544.8
(22) Anmeldetag: 21.12.2001
(51) Int. Cl.: C10M 175/00, B01D 11/04

(54) **Verfahren zur Reinigung von Ölen und zur Entfernung von Feststoffablagerungen in ölführenden Anlagen, Rohrbündelwärmeübertragern, Transformatoren, Tankbehälter oder ähnlichem**

(30) Priorität: 18.07.2001 EP 01117403
(71) Anmelder: Minitec Engineering GmbH, 45881 Gelsenkirchen (DE)
(72) Erfinder: Hammer, Ernst Ekkehard, 45481 Mülheim (DE); Weidner, Eckhard, 44795 Bochum (DE); Petermann, Marcus, 58455 Witten (DE); Kareth, Sabine, 58455 Witten (DE)
(74) Vertreter: Vomberg, Friedhelm, Dipl.-Phys.

(57) **Zusammenfassung**

Die Erfindung betrifft ein Verfahren und eine Vorrichtung zur gleichzeitigen Reinigung von Ölen und zur Entfernung von Feststoffablagerungen, die sich an Wandungen des Kreislaufes von ölführenden Anlagen, insbesondere Wärmeträgeröl(WTÖ)-Anlagen, Rohrbündelwärmeübertragern, erdölverarbeitenden Anlagen und/oder in Filtern, Transformatoren oder Tankbehältern abgesetzt haben.

Erfindungsgemäß wird ggf. nach Zugabe eines mechanisch und/oder chemisch auf Feststoffablagerungen wirkenden Mittels kontinuierlich oder periodisch ein Teilstrom aus der ölführenden Anlage, dem Transformator oder dem Tankbehälter abgezweigt, mechanisch gefiltert und mit einem Fluid im überkritischen Zustand so vermischt, daß hierbei die löslichen Bestandteile des Teilstromes im Fluid gelöst werden und daß die von den unlöslichen Bestandteilen befreite Lösung druckentspannt wird, wonach in einem Abscheider die leicht siedenden Fraktionen des Öles entfernt und das in den gasförmigen Zustand versetzte, vorher überkritische Fluid als Gas abgezogen und das verbleibende Öl in den Kreislauf der Anlage, den Transformator oder den Tankbehälter zurückgeführt wird.

## Beschreibung

Die Erfindung betrifft ein Verfahren zur gleichzeitigen Reinigung von Ölen und zur Entfernung von Feststoffablagerungen, die sich an Wandungen des Kreislaufes von ölführenden Anlagen, insbesondere Wärmeträgeröl(WTÖ)-Anlagen, Rohrbündelwärmeübertragern, erdölverarbeitenden Anlagen und/oder in Filtern, Transformatoren oder Tankbehältern abgesetzt haben.

Die Erfindung betrifft ferner eine Vorrichtung zur Durchführung dieses Verfahrens.

Es ist bekannt, daß sich Öle, die in WTÖ-Anlagen verwendet werden, mit zunehmender Betriebsdauer in ihrer Zusammensetzung verändern. So zersetzt sich Wärmeträgeröl infolge der Wärmeeinwirkung auf die Moleküle und bildet dabei sogenannte Leichtsieder, die den Flammpunkt des Öles erniedrigen. Bereits aus Gründen der Betriebssicherheit ist die Einhaltung eines Mindest-Flammpunktes erforderlich, weshalb die Leichtsieder aus dem Öl entfernt werden müssen. Mit der Bildung von Leichtsiedern geht auch die verstärkte Ablagerung von Rückständen auf den Wärmeübertragungsflächen einer WTÖ-Anlage einher.

Zudem reichern sich während des Anlagenbetriebes im Öl unlösliche Bestandteile an, die als Wachstumskeime für weitere unlösliche Bestandteile und auch weitere Ablagerungen wirken.

Daher müssen sowohl die Wärmeträgeröle als auch WTÖ-Anlagen in regelmäßigen, je nach Betriebsbedingungen unterschiedlich langen Abständen gereinigt werden. Infolge der thermischen Zersetzung der Öle entstehen Zersetzungsprodukte, Korrosionsprodukte, Petrolkoks- und Oxidationsprodukte, die sich auf den Wärmeübertragungsflächen bzw. im Kreislauf der WTÖ-Anlage ablagern und dort zum Teil harte Beläge bilden. Auch Oxidationsprodukte können in strömungsarmen Leitungsbereichen an Wandungen abgeschieden werden und dort zu Strömungsquerschnittsverengungen führen. Somit ist auch eine Reinigung der WTÖ-Anlage von Zeit zu Zeit erforderlich.

Um die WTÖ-Anlage vollständig reinigen zu können und das Wärmeträgeröl aufbereiten zu können, ist es daher nach dem Stand der Technik erforderlich, die WTÖ-Anlage zu entleeren und das Wärmeträgeröl einer externen Aufbereitungsanlage zuzuführen. Eine solche Reinigungsmaßnahme erfordert regelmäßig mehrere Tage, die mit einem entsprechenden Produktionsausfall verbunden sind. Um die Stillstandszeiten der WTÖ-Anlage gering zu halten, wird daher zuweilen das Wärmeträgeröl abgelassen und durch neues Wärmeträgeröl ersetzt, das abgelassene "Altöl" wird häufig entsorgt, was zusammen mit der Neubefüllung der WTÖ-Anlage erhebliche Kosten verursacht.

Die Ablagerungen im Kreislauf der WTÖ-Anlage, insbesondere die Beläge auf den Heizflächen, führen je nach Dicke der Ablagerung zu einem hohen Leistungsverlust der Anlage, was sich in einer verminderten Produktion und entsprechend vermindertem Umsatz niederschlägt. Es ist bekannt, daß zur Beseitigung solcher Ablagerungen chemisch oder mechanisch wirksame Reinigungsmittel eingesetzt werden können. Mechanisch wirkende Mittel sind beispielsweise abrasionsbeständige Feststoffpartikel, die aufgrund ihrer Oberflächenstruktur eine besonders abrasive Wirkung auf die Beläge ausüben, jedoch die Wände des Kreislaufes der WTÖ-Anlage nicht angreifen. Bei der Wahl von chemischen Reinigungsmitteln können nur solche Stoffe eingesetzt werden, die lediglich die Feststoffbeläge angreifen und von der Apparate- bzw. Rohrleitungswand ablösen, wobei bevorzugt die Feststoffstruktur der Beläge selbst erhalten bleiben soll. Chemische Reinigungsmittel, die gleichzeitig die Gebrauchsfähigkeit des Wärmeträgeröles verändern oder die Wandungen des Kreislaufes einer WTÖ-Anlage angreifen, können nicht eingesetzt werden. Lassen sich Feststoffablagerungen in einer WTÖ-Anlage nicht mehr durch mechanisch oder chemisch wirksame Zusatzstoffe entfernen, bleibt nur der Weg, solche Ablagerungen durch Hochdruckreinigungsverfahren, Abbürsten, Sand-Bestrahlung oder ähnliches zu entfernen.

Ähnliche Probleme stellen sich in Anlagen zur Verarbeitung von Erdöl, z.B. in Destillationskolonnen, Naphtha-Crackern, in denen die Sumpfprodukte mit Rohrbündel-Wärmeübertragern (RBW) beheizt werden. Den RBW sind in der Regel Filter zugeordnet, die mittels Stahlgewebeflächen im Sumpfprodukt befindliche Feststoffe bzw. feststoffähnliche Kohlenwasserstoffe aus dem Erdöl abtrennen. Sowohl die RBW als auch die Filter setzen sich regelmäßig zu. Fallweise müssen Filter wöchentlich gereinigt werden. Wenn die RBW oder die Filter geöffnet werden müssen, ist dies mit einem Sauerstoffzutritt verbunden. Dies hat in der Vergangenheit nicht selten zu Bränden geführt, wenn die zu reinigenden Anlagenteile nicht ausreichend abgekühlt waren. Geöffnete Anlagen werden beispielsweise mit Hochdruckreinigern behandelt und abschließend mit Gasen gespült, die den Sauerstoff verdrängen, bevor der gereinigte Anlagenbereich wieder mit dem übrigen Kreislauf verbunden wird. Alternativ kann auch mit Säuren gespült werden, wobei der zu reinigende Anlagenbereich im Regelfall geschlossen bleibt. In beiden geschilderten Fällen ist der erhebliche Nachteil gegeben, das große, Schwerölreste enthaltende Abwassermengen entstehen, deren Entsorgung kostspielig ist.

Es ist auch bekannt, daß sich in Öltanks feststoffhaltige Rückstände absetzen, die als Schlammschicht nach dem Stand der Technik mit mechanischem Räumgerät entfernt werden. Hierzu wird der Tank geöffnet, wonach das Reinigungspersonal mit Atemschutzgeräten das Tankinnere betreten und den Ölschlamm durch vorhandene Öffnungen (in der Regel Mannlöcher) nach draußen transportieren muß. Zum Teil kann der Schlamm durch Dickstoffpumpen gefördert werden, jedoch bleiben noch erhebliche Schlammengen, die von Hand aufgenommen und abtransportiert werden müssen, ggf. mit einem Förderband. Der aus den Tankbehältern entsorgte Schlamm enthält noch große Mengen flüssiger Kohlenwasserstoffe, die ein wertvoller Rohstoff der Erdölverarbeitung sind. Bei dem geschilderten, nach dem Stand der Technik praktizierten Verfahren werden solche Kohlenwasserstoffe bestenfalls in Sonder-Abfallverbrennungsanlagen entsorgt.

Es ist Aufgabe der vorliegenden Erfindung, ein Verfahren und eine Vorrichtung der eingangs genannten Art anzugeben, womit eine wirkungsvolle, periodisch und zeitlich befristete Reinigung der Wärmeträgeröle sowie der WTÖ-Anlage erreicht werden kann. Vorzugsweise soll diese Reinigung bei laufendem Betrieb der WTÖ-Anlage mit der Maßgabe durchführbar sein, daß die gereinigten Wärmeträgeröle weiter verwendet werden können.

In entsprechender Weise ist es Aufgabe der vorliegenden Erfindung, ein Verfahren und eine Vorrichtung zur Reinigung von Transformatorölen, Tankbehältern, Filtern sowie sonstiger Leitungen in erdölverarbeitenden Anlagen oder Rohrbündelwärmeübertragern anzugeben.

Diese Aufgabe wird durch das Verfahren nach Anspruch 1 gelöst. Soll außer der Öl- oder Tankbehälterreinigung (wobei im wesentlichen unlöslicher und nicht verwendbarer Rückstand entfernt wird) noch eine Reinigung von vorhandenen Wandungen, auf denen sich Ablagerungen abgesetzt haben, durchgeführt werden, ist ggf. ein mechanisch und/oder chemisch wirksames Mittel zu verwenden, daß in den Anlagenkreislauf eingeführt oder unmittelbar auf die zu behandelnden Flächen gerichtet wird. Für die Reinigung von Wärmeträgerölen und die gleichzeitige Entfernung von Feststoffablagerungen in WTÖ-Anlagen ergibt sich erfindungsgemäß, daß in den Kreislauf der WTÖ-Anlage ein mechanisch und/oder chemisch auf Feststoffablagerungen wirkendes Mittel eingeführt wird und kontinuierlich oder periodisch ein Teilstrom aus der WTÖ-Anlage abgezweigt, mechanisch gefiltert und mit einem Fluid, das sich im überkritischen Zustand befindet, so vermischt wird, daß hierbei die löslichen Bestandteile des Teilstromes im Fluid gelöst werden und daß die von den unlöslichen Bestandteilen befreite Lösung druckentspannt wird, wonach in einem Abscheider die leicht siedenden Fraktionen des Wärmeträgeröles entfernt und das in den gasförmigen Zustand versetzte, vorher überkritische Fluid als Gas abgezogen und das verbleibende gereinigte Wärmeträgeröl in den Kreislauf der Anlage zurückgeführt wird. Dieser Prozeß wird so lange durchgeführt bzw. dieser Kreislauf wird so oft wiederholt, bis der gewünschte Reinigungsgrad erreicht ist.

Der besondere Vorteil dieses Verfahrens besteht darin, daß die Reinigung des Wärmeträgeröles sowie der Anlage während der laufenden Produktion durchgeführt wird. Sowohl die unlöslichen Bestandteile des Wärmeträgeröles, wie Zersetzungsprodukte, Petrolkoks, Korrosionsprodukte und Oxidationsprodukte werden ebenso sicher abgeschieden wie die Leichtsiederanteile. Stillstandszeiten der WTÖ-Anlage können somit vollständig vermieden werden.

Vorzugsweise werden die mechanisch und/oder chemisch auf Feststoffablagerungen wirkenden Mittel zusammen mit den von Feststoffen, anderen unlöslichen und leicht siedenden Bestandteilen befreiten Wärmeträgerölen, die in den Kreislauf der Anlage zurückgeführt werden, in den WTÖ-Anlagenkreislauf eingeführt. Ggf. ist auch eine separate Einführung der mechanischen oder chemisch wirkenden Mittel zur Entfernung der Feststoffablagerungen ebenso möglich wie die gemeinsame Einführung dieser Mittel zusammen mit Additiven oder neuem Wärmeträgeröl, das zum Ausgleich etwa entstandener Wärmeträgeröl-Massenverluste in den WTÖ-Anlagenkreislauf gegeben wird.

Vorzugsweise wird der aus der WTÖ-Anlage abgezweigte Teilstrom mittels einer Hochdruckpumpe in einen statischen Mischer überführt, wo es mit dem Fluid (im überkritischen Zustand) vermischt wird. Als Fluid wird eine Kohlenwasserstoffverbindung, vorzugsweise Ethan, Propan, n-Pentan oder Butan (oder Mischungen hiervon) verwendet.

Nach einer Weiterbildung der Erfindung wird das in den gasförmigen Zustand versetzte, aus dem Abscheider abgezogene Fluid in einem Kondensator verflüssigt, hiernach wieder in den überkritischen Zustand versetzt und erneut mit einem neuen Teilstrom vermengt. Auf diese Weise durchläuft das Fluid kostensparend einen Kreislauf, in dem es beliebig oft verwendet wird. Wie bereits erwähnt, werden Masseverluste, die durch Abscheiden der Leichtsieder, der unlöslichen Bestandteile sowie auch etwaige Leckagen entstehen, durch neues Wärmeträgeröl ersetzt; Entsprechendes gilt auch für etwa verwendete Additive. Die Leichtsieder können vor oder nach der Verflüssigung aus dem Fluid abgeschieden werden.

Entsprechendes, wie vorstehend zu WTÖ-Anlagen ausgeführt, gilt für die Reinigung von Wärmeübertragern, Filtern, Rohrleitungen sowie sonstigen Zubehörteilen in erdölverarbeitenden Anlagen. Hierzu werden die von Wandbelägen und Anbackungen betroffenen Teile von einem diese Anbackungen lösenden Kohlenwasserstoff oder einem anderen Lösungsmittel oder einer Mischung eines solchen Lösungsmittels mit Kohlenwasserstoffen durchströmt. Die sich bildende Mischung aus den von der Apparatewand abgetrennten Feststoffen mit den Lösungsmitteln und/oder dem Kohlenwasserstoff wird einem Kreislauf mit einem überkritischen Fluid zugeführt. In einem ersten Abscheidebehälter werden die Feststoffe entfernt und in einem zweiten Abscheidebehälter die gasförmigen Leichtsiede-Bestandteile (beides im wesentlichen gas- und flüssigkeitsfrei). Der als "Lösungsmittel" verwendete Kohlenwasserstoff verbleibt entweder in der zu reinigenden Anlage oder er wird im Kreislauf mit dem überkritischen Fluid zwecks anderweitiger Verwendung abgeschieden. Etwa verwendete Lösungsmittel werden entweder, verbunden mit den abgelösten Feststoffen, oder mittels einer Schwerkraft-, extraktiven oder destillativen Trennmethode aus dem Kreislauf abgeschieden.

Bei Wärmeübertragern, Filtern oder Rohrleitungen in erdölverarbeitenden Anlagen können anstelle der lösenden Kohlenwasserstoffe oder Lösungsmittel auch mechanisch auf die Feststoffablagerungen wirkende Mittel eingesetzt werden, die zusammen mit den abgelösten Feststoffbelägen in einem Partikelfilter oder im ersten Abscheidebehälter des Kreislaufes mit überkritischem Fluid abgeschieden werden. Vorzugsweise wird bei der letztgenannten Abscheidung auch eine Abtrennung von feinsten Partikeln mit einem Durchmesser < 1 µm erreicht.

Bei der Reinigung von Tankanlagen, die zur Lagerung von Erdölen, Erdölprodukten oder ähnlichen Stoffen verwendet werden, werden die nicht oder nur schwer pumpfähigen Rückstände in der Tankanlage mittels eines verdünnenden Kohlenwasserstoffes oder eines Lösungsmittels pumpfähig gemacht und aus dem Tank in einen Kreislauf mit einem überkritischen Fluid gepumpt. In diesem Kreislauf werden die nicht löslichen Bestandteile des Rückstandes in einem ersten Abscheidebehälter nahezu gas- und flüssigkeitsfrei und die gasförmigen Leichtsieder in einem zweiten Abscheidebehälter abgeschieden. Der verdünnende Kohlenwasserstoff oder das Lösungsmittel werden nach Verlassen des zweiten Abscheidebehälters ganz oder teilweise in den Tank zurückgepumpt oder zusammen mit den von den Feststoffen und Leichtsiedern getrennten Ölen als Überschußöl in den Produktionskreislauf eingespeist. Gegebenenfalls ist das Lösungsmittel auf z.B. destillativem oder extraktivem Wege oder durch Schwerkraftabscheidung von dem verdünnenden Kohlenwasserstoff zu trennen.

Das erfindungsgemäße Verfahren ist grundsätzlich auch zur Reinigung und zur Konditionierung von Transformatorenölen verwendbar, die in einen Kreislauf mit einem überkritischen Fluid gepumpt und dort in einem ersten Abscheidebehälter von unlöslichen Feststoffen und Wasser und in einem zweiten Abscheidebehälter von gasförmigen Leichtsiedern und Wasser befreit werden.

Zur Durchführung der vorbeschriebenen Verfahren wird die im Anspruch 9 beschriebene Vorrichtung verwendet, bei der in einem im wesentlichen geschlossenen Leitungskreislauf, der lösbar mit dem Kreislauf einer ölführenden Anlage, mit Filtern, Transformatoren oder Tankbehältern verbindbar und in den über eine Pumpe ein Teilstrom abzweigbar ist, ein Mischer zur Herstellung einer Lösung aus einem zuführbaren Fluid im überkritischen Zustand und der löslichen Bestandteile des Teilstromes, ein Absetzbehälter zur Abscheidung unlöslicher Bestandteile aus der vorgenannten Lösung, eine einem Entspannungsventil nachgeschaltete Destillationskolonne sowie ggf. ein Kondensator (Kühler) und ein Wärmeübertrager zur Wiederherstellung des überkritischen Zustandes verwendet wird. Zusätzlich können noch mechanische Filter zur Absonderung von Feststoffpartikeln im Kreislauf vorgesehen sein. Soweit die vorbeschriebene Vorrichtung nicht stationär installiert wird, ist nach einer Weiterbildung der Erfindung vorgesehen, daß die gesamten Anlagenteile dieser Vorrichtung auf einem Fahrzeug angeordnet sind. Eine solch mobile Einheit hat den Vorteil, daß mit ein und derselben Reinigungsvorrichtung nacheinander verschiedene, an getrennten Orten stehende Anlagen gereinigt werden können. Mit der erfindungsgemäßen Vorrichtung bzw. dem erfindungsgemäßen Verfahren lassen sich in ein und demselben Kreislauf sowohl Leichtsieder, im Wärmeträgeröl befindliche unlösliche Störstoffe als auch die Feststoffablagerungen in der WTÖ-Anlage wirkungsvoll beseitigen. Entsprechendes gilt auch für Rohrbündelwärmeübertrager, Transformatoren oder Tankbehälter. Bei Tankbehältern wird vorzugsweise ein verdünnender Kohlenwasserstoff oder ein Lösungsmittel mittels einer Einrichtung zum Einbringen dieser Flüssigkeiten in der Nähe des Ansaugstutzens in den schwer- oder nichtflüssigen Tankrückstand injiziert, wonach die entstehende fließfähige Mischung über diesen Ansaugstutzen aus dem Tank entfernt werden kann. Die Einrichtung zum Einbringen der verdünnenden Flüssigkeiten und der Ansaugstutzen sind vorzugsweise verfahrbar und höhenverstellbar angeordnet, um jeden Ort im Tankbehälter optimal erreichen zu können.

Weitere Vorteile des erfindungsgemäßen Verfahrens sowie der erfindungsgemäßen Vorrichtung werden anhand der Zeichnungen erläutert, die jeweils schematische Ansichten des Kreislaufes einer Reinigungsvorrichtung zeigen.

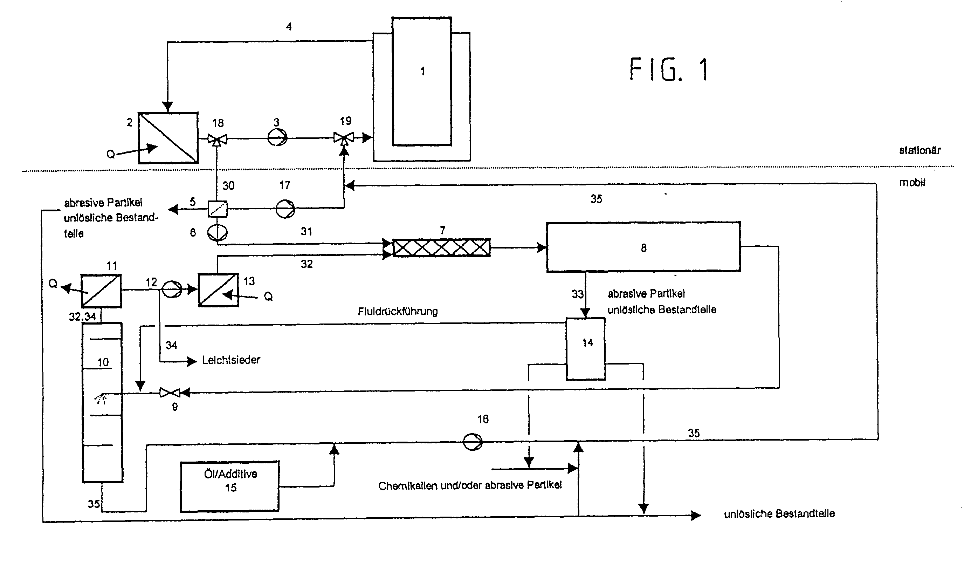

Die in Fig. 1 dargestellte WTÖ-Anlage besteht im wesentlichen aus einem Wärmeverbraucher 1, einer Wärmequelle 2, einer Umwälzpumpe 3 sowie zu deren Verbindung notwendigen Rohrleitungen 4. Auf der Pumpensaug- und der Pumpendruckseite der Umwälzpumpe 3 sind Anschlußstutzen 18 und 19 in Form von Drei-Wegeventilen vorgesehen, über die die nachfolgend beschriebene, vorzugsweise mobile Vorrichtung mit der WTÖ-Anlage verbunden werden kann. Mittels der Ventile 18 und 19 kann der volle Umwälzstrom 30 der WTÖ-Anlage an der stationären Umwälzpumpe 3 vorbei über einen Filter 5 und eine mobile Umwälzpumpe 17 geführt werden. Damit ist der Vorteil verbunden, daß die zur Reinigung der Flächen der WTÖ-Anlage verwendeten Feststoffpartikel nicht über die Umwälzpumpen 3 und 17 geführt werden. Die Pumpe 17 kann zudem die Umlaufgeschwindigkeit erhöhen, was einen positiven Abreinigungseffekt auf den Flächen der WTÖ-Anlage bewirkt. Der nach Filter 5 abgezweigte Teilstrom 31 wird einem statischen Mischer 7 zugeführt, in dem das Wärmeträgeröl mit einem im Kreislauf geführten Fluid 32 als Extraktionsmittel vermischt wird. Die im Filter 5 ausgefilterten groben abrasiven Partikel sowie sonstigen unlöslichen Bestandteile werden abgeschieden und entsorgt.

Von dem Mischer 7 wird die Mischung aus dem Wärmeträgeröl-Teilstrom 31 sowie dem Fluid 32 einem Absetzbehälter 8 zugeführt. In diesem Absetzbehälter 8 fallen mitgeführte Asphaltene und feinste Feststoffpartikel aus und können als Strom 33 entnommen bzw. einem weiteren Entspannungsbehälter 14 entnommen werden. Die aus dem Absetzbehälter 8 im übrigen entnehmbare Mischung aus dem Extraktionsmittel (z.B. Pentan) und den gelösten Wärmeträgerölbestandteilen wird über ein Entspannungsventil 9 einer Destillationskolonne 10 zugeleitet, aus der das nunmehr gasförmige Extraktionsmittel einschließlich der Leichtsiederanteile des Wärmeträgeröles abgezogen wird, während das gereinigte Wärmeträgeröl flüssig ausfällt und als Teilstrom 35 mittels einer Pumpe 16 wieder in die WTÖ-Anlage zurückgeführt wird. Das gereinigte Wärmeträgeröl dient vorzugsweise zugleich als Trägermedium für chemisch oder mechanisch wirkende Reinigungsmittel, die dem zur WTÖ-Anlage zurücklaufenden Wärmeträgerölstrom 35 zugemischt werden. Sofern mechanisch wirkende Reinigungsmittel der Wärmeträger-ölanlage zugeführt werden sollen, können diese ebenfalls über den Filter 5 ausgesondert und ggf. wieder verwendet werden. Etwaige Öle sowie Additive zum Ausgleich eines etwa entstandenen Massenverlustes des Wärmeträgeröles können aus einem Vorratsbehälter 15 dem rückgeführten Strom 35 beigegeben werden.

Das die Destillationskolonne 10 verlassende gasförmige Extraktionsmittel 32 sowie gasförmige Leichtsieder 34 werden in einen Kühler 11 überführt.

Das von den Leichtsiedern 34 befreite Fluid gelangt über die Pumpe 12 in einen Wärmeübertrager 13 und von dort aus zur abermaligen Vermengung mit einem Teilstrom 31 in den Mischer 7. Die in der Skizze dargestellte Umwälzpumpe 17 kann während der Wärmeträgeröl-Aufbereitung anstelle der Umwälzpumpe 3 die erforderliche Umwälzleistung im Kreislauf der WTÖ-Anlage übernehmen.

Das beschriebene Verfahren gewährleistet eine schonende Reinigung der Apparateflächen und Rohrleitungen der WTÖ-Anlage bei gleichzeitiger Pflege des Wärmeträgeröles. Die Vorrichtung zur Reinigung der Wärmeträgeröle und der Zuführung und der Abführung der mechanischen und/oder chemischen Reinigungsmittel kann stationär oder mobil installiert sein, z.B. auf einem Lastkraftwagen.

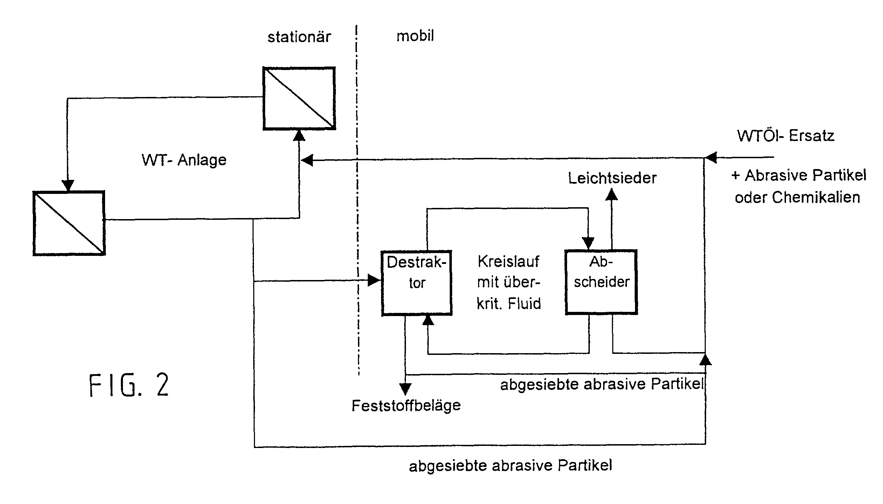

Das Verfahren bzw. der prinzipielle Aufbau der Vorrichtung sind in Fig. 2 in vereinfachter Darstellung abgebildet.

Bei der Wartung von WTÖ-Anlagen dient das Wärmeträgeröl als Trägersubstanz für zudosierte abrasive Feststoffe oder Chemikalien, die Beläge von den Wärmeübertragungsflächen mechanisch und/oder chemisch entfernen. Der die WTÖ-Anlage verlassende Stoffstrom besteht aus dem Wärmeträgeröl, abrasiven Partikeln oder Reagenzien und den von den Wärmeübertragungsflächen gelösten Feststoffen. Durch Mischung dieses Stoffstromes mit einem im Kreislauf geführten überkritischen Fluid wird das Wärmeträgeröl vollständig gelöst, während die Feststoffe nahezu frei von Flüssigkeit aus dem Kreislauf abgeschieden werden. Die abrasiven Partikel können nach Absieben in das Wärmeträgeröl zurückgegeben werden, während die von den Wärmeübertragungsflächen gelösten Feststoffe (Feststoffbeläge) entsorgt werden. Der besondere Vorteil dieser Verfahrensvariante besteht darin, daß im Kreislauf des überkritischen Fluids sowohl die abgelösten Feststoffe als auch die aus dem Wärmeträgeröl zu entfernenden leicht siedenden Bestandteile sicher abgeschieden werden. Anstelle der abrasiven Partikel können auch flüssige Lösungsmittel zudosiert werden.

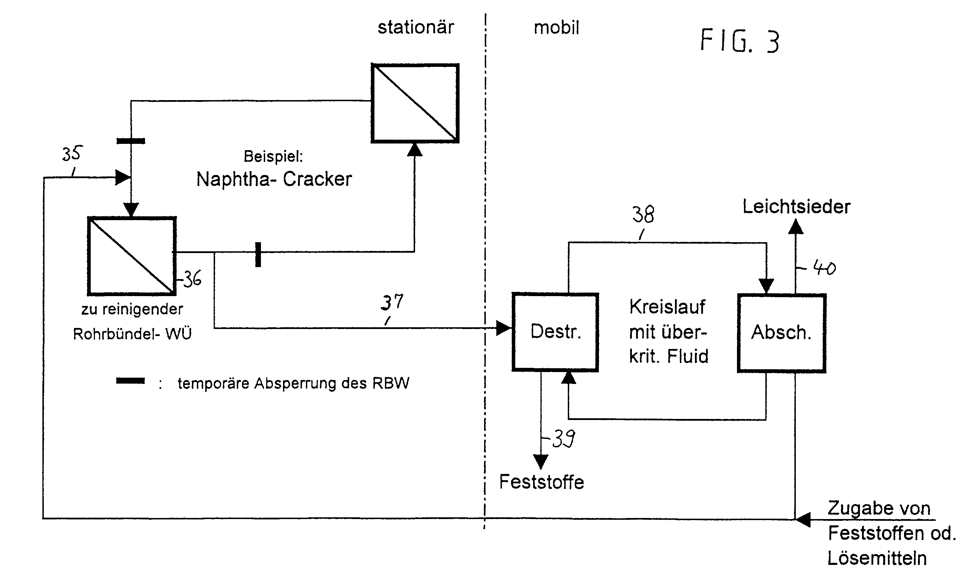

Bereits ein Vergleich der Fig. 2 mit Fig. 3 zeigt, daß sich bei der Verfahrensführung zur Reinigung von Rohrbündelwärmeübertragern und Filtern grundsätzlich nichts ändert. Nach temporärer Absperrung des Rohrbündelwärmeübertragers vom übrigen Kreislauf des Naphtha-Crackers werden dessen Wärmeübertragungsrohre von einem flüssigen Kohlenwasserstoff durchströmt, der zudem mit abrasiven Partikeln oder lösenden Chemikalien versetzt sein kann (siehe Zufuhrleitung 35). Die in der zu reinigenden Rohrbündelwärmeübertragungseinheit 36 enthaltenen Feststoffbeläge werden abgelöst und gelangen über die Leitung 37 in einen Kreislauf 38, in dem mittels des überkritischen Fluids Feststoffe und umlaufendes Öl voneinander getrennt werden. Die Feststoffe werden (siehe Pfeil 39) abgeschieden, wobei die abrasiven Partikel in den Reinigungskreislauf zurückgegeben werden können, wie dies anhand Fig. 1 beschrieben worden ist. Das umlaufende Öl, aus dem (siehe Pfeil 40) die Leichtsieder abgeschieden werden, wird erneut zum Rohrbündelwärmeübertrager zurückgeführt. Im Falle einer flüssigen Lösemittelzugabe werden Öl und Lösemittel im Kreislauf geführt; nur die abzustoßende Ölmenge wird vom Lösemittel getrennt.

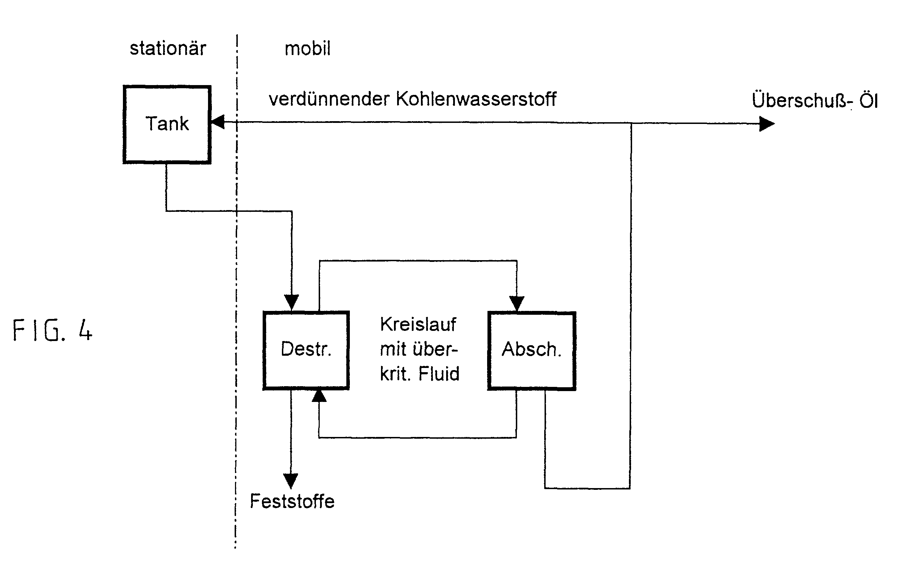

Wie schematisch in Fig. 4 dargestellt, können auf entsprechende Weise auch Tanks gereinigt werden, in denen sich zähflüssige Rückstände im Bereich des Tankbodens abgesetzt haben. Die schweren Komponenten werden ebenfalls mittels eines im ersten Kreislauf geführten, verdünnenden Kohlenwasserstoffes pumpfähig gemacht, wonach die entstehende Mischung als Suspension im zweiten Kreislauf mit überkritischem Fluid in die Komponenten Feststoffe und Öl getrennt und der Feststoff aus dem Prozeß abgeschieden wird. Das gereinigte Öl wird in den Rohölverarbeitungsprozeß zurückgegeben.

Im Falle der Rohrbündelwärmeübertrager- und Tankreinigung werden die zu entsorgenden Feststoffe nahezu frei von Flüssigkeiten abgeschieden. Die Ölphase, die nach dem Stand der Technik zusammen mit der wässerigen Reinigungslösung entsorgt worden ist, kann bei Anwendung der erfindungsgemäßen Verfahrenstechnik in den Erdölverarbeitungsprozeß zurückgegeben werden.

Das erfindungsgemäße Verfahren bzw. die insbesondere mobile Vorrichtung arbeiten äußerst effizient und wirtschaftlich. Bisher gegebene Risiken werden wirkungsvoll vermieden.

## Patentansprüche

1. Verfahren zur gleichzeitigen Reinigung von Ölen und zur Entfernung von Feststoffablagerungen, die sich an Wandungen des Kreislaufes von ölführenden Anlagen, insbesondere Wärmeträgeröl(WTÖ)-Anlagen, Rohrbündelwärmeübertragern, erdölverarbeitenden Anlagen und/oder in Filtern, Transformatoren oder Tankbehältern abgesetzt haben,
**dadurch gekennzeichnet,**
**daß** ggf. nach Zugabe eines mechanisch und/oder chemisch auf Feststoffablagerungen wirkenden Mittels kontinuierlich oder periodisch ein Teilstrom aus der ölführenden Anlage, dem Transformator oder dem Tankbehälter abgezweigt, mechanisch gefiltert und mit einem Fluid im überkritischen Zustand so vermischt wird, daß hierbei die löslichen Bestandteile des Teilstromes im Fluid gelöst werden und daß die von den unlöslichen Bestandteilen befreite Lösung druckentspannt wird, wonach in einem Abscheider die leicht siedenden Fraktionen des Öles entfernt und das in den gasförmigen Zustand versetzte, vorher überkritische Fluid als Gas abgezogen und das verbleibende Öl in den Kreislauf der Anlage, den Transformator oder den Tankbehälter zurückgeführt wird, wobei das Verfahren so lange durchgeführt bzw. so oft wiederholt wird, bis der gewünschte Reinigungsgrad erreicht ist.

2. Verfahren nach Anspruch 1, **dadurch gekennzeichnet, daß** die mechanisch und/oder chemisch auf Feststoffablagerungen wirkenden Mittel zusammen mit dem von Feststoffen, anderen unlöslichen und leicht siedenden Bestandteilen befreiten Ölen in den Kreislauf der ölführenden Anlage, den Transformator oder den Tankbehälter zurückgeführt werden.

3. Verfahren nach Anspruch 1 oder 2, **dadurch gekennzeichnet, daß** der aus der ölführenden Anlage, einem Transformator oder Tankbehälter abgezweigte Teilstrom mittels einer Hochdruckpumpe in einen statischen Mischer überführt wird.

4. Verfahren nach einem der Ansprüche 1 bis 3, **dadurch gekennzeichnet, daß** als Fluid eine Kohlenwasserstoffverbindung, vorzugsweise Ethan, Propan, n-Pentan oder Butan verwendet wird.

5. Verfahren nach einem der Ansprüche 1 bis 4, **dadurch gekennzeichnet, daß** das in den gasförmigen Zustand versetzte, aus dem Abscheider abgezogene Fluid in einem Kondensator verflüssigt und nach Druckerhöhung wieder in den überkritischen Zustand versetzt und erneut mit einem neuen Teilstrom vermischt wird.

6. Verfahren nach einem der Ansprüche 1 bis 5, **dadurch gekennzeichnet, daß** die Leichtsieder vor oder nach der Verflüssigung aus dem Fluid abgeschieden werden.

7. Verfahren nach einem der Ansprüche 1 bis 6, **dadurch gekennzeichnet, daß** zur Reinigung von Tankbehältern, in denen Erdöle, Erdölprodukte oder hiermit ähnliche Stoffe gelagert werden, die nicht oder nur schwer pumpfähigen Rückstände mittels eines verdünnenden Kohlenwasserstoffes oder eines Lösungsmittels pumpfähig gemacht und aus dem Tank in einen Kreislauf mit einem überkritischen Fluid gepumpt werden und die nicht lösbaren Bestandteile in einem ersten Abscheidebehälter im wesentlichen gas- und flüssigkeitsfrei und die gasförmigen Leichtsieder in einem zweiten Abscheidebehälter abgeschieden werden und daß der verdünnende Kohlenwasserstoff oder das Lösungsmittel nach Verlassen des zweiten Abscheidebehälters ganz oder teilweise in den Tank zurückgepumpt oder zusammen mit den von den Feststoffen und Leichtsiedern getrennten Ölen als Überschußöl in einen Produktionskreislauf eingespeist wird.

8. Verwendung des Verfahrens nach einem der Ansprüche 1 bis 6, zum Reinigen und Konditionieren von Transformatorölen durch Entfernung der unlöslichen Feststoffe, gasförmigen Leichtsieder und Wasser.

9. Vorrichtung zur Durchführung des Verfahrens nach einem der Ansprüche 1 bis 8, **dadurch gekennzeichnet, daß** in einem im wesentlichen geschlossenen Leitungskreislauf, der (lösbar) mit dem Kreislauf einer ölführenden Anlage, mit Filtern, Transformatoren oder Tankbehältern verbindbar und in den über eine Pumpe (6) ein Teilstrom abzweigbar ist,
- ein Mischer (7) zur Herstellung einer Lösung aus einem zuführbaren Fluid (32) im überkritischen Zustand und den löslichen Bestandteilen des Teilstromes (31),
- ein Absetzbehälter (8) zur Abscheidung unlöslicher Bestandteile (33) aus der vorgenannten Lösung,
- eine einem Entspannungsventil(9) nachgeschaltete Destillationskolonne (10) und
- ggf. ein Kondensator (Kühler) (11) sowie nach Druckerhöhung ein Wärmeübertrager (13) zur Wiederherstellung des überkritischen Zustandes vorgesehen sind.

10. Vorrichtung nach Anspruch 9, **dadurch gekennzeichnet, daß** die gesamten Anlagenteile auf einem Fahrzeug angeordnet sind.
